# EUROPEAN PATENT APPLICATION

(11) **EP 4 645 586 A1**
(43) Date of publication of application: **05.11.2025**
(21) Application number: 23926064.9
(22) Date of filing: 05.12.2023
(51) Int. Cl.: H01Q 1/02, H05K 1/02

(54) **ELECTRONIC DEVICE**

(30) Priority: 08.03.2023 CN 202310246003
(71) Applicant: Honor Device Co., Ltd., Shenzhen, Guangdong 518040 (CN)
(72) Inventor: GUO, Jianqiang, Shenzhen, Guangdong 518040 (CN)
(74) Representative: Thun, Clemens
(86) International application number: PCT/CN2023/136565
(87) International publication number: WO 2024/183370

(57) **Abstract**

Embodiments of this application provide an electronic device. The electronic device includes a housing, a circuit board assembly, and a main circuit board. The housing includes a border frame. The border frame includes an antenna radiator. The antenna radiator includes a feed point and a ground point. The circuit board assembly is arranged in the housing. The circuit board assembly includes a printed circuit board, a radio frequency switch, a flexible printed circuit board, and a solder joint. The printed circuit board is arranged facing the antenna radiator. The printed circuit board includes a feed terminal and a ground terminal. The feed point is electrically connected to the feed terminal. The ground point is electrically connected to the ground terminal. The radio frequency switch is arranged on the printed circuit board. The radio frequency switch is electrically connected to the antenna radiator. The printed circuit board includes a first pad. The flexible printed circuit board includes a second pad. The second pad has a pad through hole. The first pad is arranged facing the pad through hole. The solder joint is connected to the first pad and the second pad. A part of the solder joint is located in the pad through hole. The main circuit board is arranged in the housing. The flexible printed circuit board is electrically connected to the main circuit board and the printed circuit board.

## Description

This application claims priority to Chinese Patent Application No. 202310246003.2, filed with the China National Intellectual Property Administration on March 8, 2023 and entitled "ELECTRONIC DEVICE", which is incorporated herein by reference in its entirety.

### TECHNICAL FIELD

Embodiments of this application relate to the technical field of terminals, and in particular, to an electronic device.

### BACKGROUND

With the explosive growth of technologies in the field of electronic devices such as smart watches, smartphones, or tablet computers, an electronic device has increasingly more functions. Different electronic members may be integrated in a casing of an electronic device, for example, a central processing unit (Central Processing Unit, CPU), an intelligent algorithm chip, or a power management chip (Power Management IC, PMIC). The electronic device further includes an antenna radiator. The antenna radiator is an apparatus used by the electronic device to receive or transmit an electromagnetic wave signal. With the continuous development and iteration of mobile communication technologies, increasingly high communication requirements are also imposed on the electronic device. Due to the increasingly more compact and thin structural design of the electronic device, an antenna signal may be unstable during use of the electronic device, affecting usage experience of the electronic device.

### SUMMARY

Embodiments of this application provide an electronic device, which may help ensure stability of an antenna signal and improve antenna efficiency.

A first aspect of this application provides an electronic device, including a housing, a circuit board assembly, and a main circuit board.

The housing includes a border frame. The border frame includes an antenna radiator. The antenna radiator includes a feed point and a ground point.

The circuit board assembly is arranged in the housing. The circuit board assembly includes a printed circuit board, a radio frequency switch, a flexible printed circuit board, and a solder joint. The printed circuit board is arranged facing the antenna radiator. The printed circuit board includes a feed terminal and a ground terminal. The feed point is electrically connected to the feed terminal. The ground point is electrically connected to the ground terminal. The radio frequency switch is arranged on the printed circuit board. The radio frequency switch is electrically connected to the antenna radiator. The printed circuit board includes a first pad. The flexible printed circuit board includes a second pad. The second pad has a pad through hole. The first pad is arranged facing the pad through hole. The solder joint is connected to the first pad and the second pad. A part of the solder joint is located in the pad through hole.

The main circuit board is arranged in the housing. The flexible printed circuit board is electrically connected to the main circuit board and the printed circuit board.

A second aspect of this application provides an electronic device, including a housing, a circuit board assembly, and a main circuit board.

The housing includes a border frame. The border frame includes an antenna radiator. The antenna radiator includes a feed point and a ground point.

The circuit board assembly is arranged inside the housing. The circuit board assembly includes a printed circuit board, a radio frequency switch, and a flexible printed circuit board. The printed circuit board is arranged facing the antenna radiator. The printed circuit board includes a feed terminal and a ground terminal. The feed point is electrically connected to the feed terminal. The ground point is electrically connected to the ground terminal. The radio frequency switch is arranged on the printed circuit board. The radio frequency switch is electrically connected to the antenna radiator. The printed circuit board and the flexible printed circuit board are integrally formed.

The main circuit board is arranged in the housing. The flexible printed circuit board is electrically connected to the main circuit board and the printed circuit board.

A circuit board assembly is separately arranged in the electronic device of embodiments of this application. The printed circuit board in the circuit board assembly is arranged near the antenna radiator of the border frame, so that a spacing between the radio frequency switch arranged on the printed circuit board and the antenna radiator is effectively shortened, thereby shortening a signal transmission path between the radio frequency switch and the antenna radiator. This helps reduce a possibility that an external electromagnetic field causes coupling interference to a signal transmitted between the radio frequency switch and the antenna radiator, thereby ensuring stability of an antenna signal, and improving antenna efficiency. The printed circuit board in the circuit board assembly is electrically connected to the main circuit board through the flexible printed circuit board. The printed circuit board is connected to the flexible printed circuit board through the first pad, the solder joint, and the second pad, or the printed circuit board and the flexible printed circuit board are integrally formed. Therefore, on one hand, a thickness of a joint of the printed circuit board and the flexible printed circuit board is effectively reduced, and the printed circuit board is suitably arranged in a relatively narrow space, to make full use of an internal space of the electronic device. On the other hand, if the printed circuit board is connected to the flexible printed circuit board through a board-to-board connector, because the board-to-board connector has a high grounding impedance, an impedance discontinuity point is formed at the board-to-board connector, at which a sudden impedance change exists, which easily causes coupling with an external electromagnetic field and interferes with a signal transmitted between the printed circuit board and the flexible printed circuit board. Therefore, compared with a connection manner of the board-to-board connector, the structure of the printed circuit board and the flexible printed circuit board of this application helps eliminate resistance discontinuity, so that signal isolation can be improved, a possibility of coupling interference is effectively reduced. In addition, insertion loss is helped to reduce and antenna efficiency is improved.

In a possible implementation, the solder joint is formed through a laser welding process.

Because the solder joint between the first pad and the second pad is formed through the laser welding process, in a process of welding the first pad and the second pad, a region on the flexible printed circuit board that is farther from the second pad is not prone to a high-temperature condition, so that a possibility of burning of an electronic member arranged on the flexible printed circuit board due to a high-temperature environment may be effectively reduced, thereby helping increase yields of the circuit board assembly.

In a possible implementation, the printed circuit board has a first connection region. The first connection region is arranged on an outer side of the first pad. The flexible printed circuit board has a second connection region. The second connection region is arranged on an outer side of the second pad. The first connection region is connected to the second connection region.

The printed circuit board and the flexible printed circuit board form a connection region at the outer side of the first pad and the outer side of the second pad. Therefore, when the flexible printed circuit board is subjected to a force along an axis perpendicular to the pad through hole, the force is not easily transmitted to a region of the second pad, thereby reducing a possibility that a tear occurs to the flexible printed circuit board at the second pad.

In a possible implementation, along a height direction of the electronic device, the antenna radiator is located in a middle section of the border frame.

The antenna radiator is arranged in the middle section of the border frame. In other words, the antenna radiator is arranged in a middle region of the border frame. Therefore, when a user holds the electronic device in a folded state or an unfolded state, the user does not easily block the antenna radiator located in the middle section of the border frame with a hand. This helps reduce a possibility that a handheld position of the user causes an adverse effect on an antenna signal of the antenna radiator, thereby ensuring that the antenna radiator of the electronic device in the folded state or the unfolded state can obtain signal transmission of relatively high quality, and improving satisfaction of usage experience of the electronic device.

In a possible implementation, the border frame includes a break joint. Two ends of the antenna radiator are each provided with the break joint along the height direction.

In a possible implementation, the circuit board assembly further includes a conductive elastic member. The conductive elastic member is arranged between the feed point and the feed terminal. The conductive elastic member is arranged between the ground point and the ground terminal.

The conductive elastic member can ensure reliability of an electrical connection between the feed point and the feed terminal and reliability of an electrical connection between the ground point and the ground terminal.

In a possible implementation, the electronic device further includes a board-to-board connector. The flexible printed circuit board is electrically connected to the main circuit board through the board-to-board connector.

In a possible implementation, the electronic device further includes a radio frequency transceiver module and a radio frequency chip. The radio frequency transceiver module and the radio frequency chip are both arranged on the main circuit board. The radio frequency transceiver module is electrically connected to the radio frequency chip. The flexible printed circuit board is electrically connected to the radio frequency transceiver module.

The radio frequency transceiver module has a relatively small size, which helps reduce an area of the main circuit board.

In a possible implementation, the border frame has an accommodating portion. At least part of the printed circuit board is arranged in the accommodating portion.

On one hand, the printed circuit board may make full use of the border frame without occupying space at an inner side of the border frame, which helps save the space at the inner side of the border frame. On the other hand, the border frame may provide protection to the printed circuit board, reducing a possibility of damage caused by crushing or collision of the printed circuit board.

In a possible implementation, the printed circuit board includes a positioning portion. The border frame includes a limiting portion. The positioning portion is connected to the limiting portion.

The positioning portion of the printed circuit board is connected to the limiting portion of the border frame, so that the printed circuit board can be quickly and accurately positioned, thereby facilitating assembly of the printed circuit board and the border frame. In addition, the border frame can restrain the printed circuit board to prevent the printed circuit board from exiting from the accommodating portion.

In a possible implementation, along a thickness direction of the printed circuit board, the radio frequency switch is arranged on a side of the printed circuit board facing the antenna radiator.

The radio frequency switch is relatively near the antenna radiator, thereby helping implement an electrical connection between the radio frequency switch and the antenna radiator.

In a possible implementation, a value of a spacing between the radio frequency switch and the feed terminal is in a range of 15 millimeters to 100 millimeters, thereby helping reduce a possibility of signal crosstalk between the radio frequency switch and the feed terminal.

In a possible implementation, a value of a spacing between the radio frequency switch and the ground terminal is in a range of 15 millimeters to 100 millimeters, thereby helping reduce a possibility of signal crosstalk between the radio frequency switch and the ground terminal.

In a possible implementation, the printed circuit board includes an antenna interface pad, a control signal pad, and a ground pad. A periphery of the antenna interface pad is provided with a plurality of ground pads. A periphery of the control signal pad is provided with a plurality of ground pads.

A periphery of the antenna interface pad is provided with a plurality of ground pads, so as to help reduce a possibility that the antenna interface pad is interfered with by an external signal. A periphery of the control signal pad is provided with a plurality of ground pads, so as to help reduce a possibility that the control signal pad is interfered with by an external signal.

In a possible implementation, a minimum spacing between the antenna interface pad and the control signal pad is greater than or equal to 3 millimeters.

In a possible implementation, a minimum spacing between each of the ground pads on the periphery of the antenna interface pad and each of the ground pads on the periphery of the control signal pad is greater than or equal to 2 millimeters.

In a possible implementation, the flexible printed circuit board includes at least two metal wire layers. The at least two metal wire layers are stacked along a thickness direction of the flexible printed circuit board. Each of the metal wire layers includes a ground line and a radio frequency signal line. Along the thickness direction of the flexible printed circuit board, an orthographic projection of the radio frequency signal line on one of two adjacent metal wire layers is located within an orthographic projection of the ground line on the other metal wire layer, thereby helping reduce a possibility of crosstalk between the radio frequency signal line on one metal wire layer and the radio frequency signal line on the other metal wire layer of the two adjacent metal wire layers.

In a possible implementation, along a width direction of the flexible printed circuit board, a spacing between an outer edge of the orthographic projection of the radio frequency signal line and an outer edge of the orthographic projection of the ground line is greater than or equal to 0.01 millimeters.

In a possible implementation, the border frame is a metal frame. A part of the border frame forms the antenna radiator. Alternatively, the border frame includes an isolating frame body. The antenna radiator is arranged on the isolating frame body.

In a possible implementation, the housing includes a rotating shaft apparatus, a first casing, and a second casing. The first casing and the second casing are separately connected to the rotating shaft apparatus. The first casing and the second casing each include a border frame.

In a possible implementation, the electronic device further includes a first battery. The first battery is arranged in the first casing. Along a thickness direction of the electronic device, at least part of the flexible printed circuit board in the first casing is located on a side of the first battery, so that the flexible printed circuit board may be arranged by using a gap between the first battery and another structural member, which helps improve a utilization rate of an internal space of the electronic device.

In a possible implementation, the electronic device further includes a first battery and a second battery. The first battery is arranged in the first casing. The second battery is arranged in the second casing. The printed circuit board in the first casing is located on a side of the first battery facing the antenna radiator. The printed circuit board in the second casing is located on a side of the second battery facing the antenna radiator.

In a possible implementation, the electronic device further includes a first auxiliary circuit board and an electrical connection line. The first auxiliary circuit board is arranged in the second casing. The electrical connection line is connected to the main circuit board and the first auxiliary circuit board. The flexible printed circuit board in the second casing is electrically connected to the first auxiliary circuit board.

In a possible implementation, the electronic device further includes a board-to-board connector. The main circuit board is electrically connected to the electrical connection line through the board-to-board connector. The first auxiliary circuit board is electrically connected to the electrical connection line through the board-to-board connector. Alternatively,

the flexible printed circuit board in the second casing is electrically connected to the first auxiliary circuit board through the board-to-board connector.

In a possible implementation, the electronic device further includes a second auxiliary circuit board. The second auxiliary circuit board is arranged in the second casing. The flexible printed circuit board in the second casing includes a body, a first branch, and a second branch. The body is electrically connected to the first auxiliary circuit board. The first branch is electrically connected to the printed circuit board in the second casing. The second branch is electrically connected to the second auxiliary circuit board.

In a possible implementation, the electronic device further includes the second battery. The second battery is arranged in the second casing. The second battery is arranged between the first auxiliary circuit board and the second auxiliary circuit board. Along a thickness direction of the electronic device, at least part of the first branch and at least part of the second branch are located on a side of the second battery, so that the flexible printed circuit board may be arranged by using a gap between the second battery and another structural member, which helps improve a utilization rate of an internal space of the electronic device.

In a possible implementation, the first branch includes a first connection segment and a second connection segment that intersect each other. The first connection segment is connected to the body. The second connection segment is electrically connected to the printed circuit board.

In a possible implementation, the second branch includes a third connection segment, a fourth connection segment, a fifth connection segment, and a sixth connection segment that are connected in sequence. The third connection segment is connected to the body. The sixth connection segment is electrically connected to the second auxiliary circuit board. An included angle between the fourth connection segment and the fifth connection segment is greater than or equal to 90°. An included angle between the fifth connection segment and the sixth connection segment is greater than or equal to 90°.

The included angle between the fourth connection segment and the fifth connection segment is greater than or equal to 90°, which helps reduce a possibility that a tear occurs to the fourth connection segment and the fifth connection segment at a junction therebetween as a result of the fourth connection segment or the fifth connection segment being subjected to a pull force. The included angle between the fifth connection segment and the sixth connection segment is greater than or equal to 90°, which helps reduce a possibility that a tear occurs to the fifth connection segment and the sixth connection segment at a junction therebetween as a result of the fifth connection segment or the sixth connection segment being subjected to a pull force.

In a possible implementation, an included angle between the first connection segment and the third connection segment is in a range of 30° to 150°.

If the included angle between the first connection segment and the third connection segment is less than 30°, a tear easily occurs to the first connection segment and the third connection segment at a junction therebetween when the first connection segment and the third connection segment are subjected to an external pulling force. If the included angle between the first connection segment and the third connection segment is greater than 150°, the first connection segment and the third connection segment occupy an excessive space, which does not help arrange the flexible printed circuit board in a narrow space.

In a possible implementation, a minimum spacing between the first connection segment and the fourth connection segment is greater than or equal to 3 millimeters.

In a possible implementation, along the height direction of the electronic device, a spacing between the body and an edge of the second connection segment close to the second auxiliary circuit board is greater than or equal to 5 millimeters.

In a possible implementation, the housing further includes a third casing. The rotating shaft apparatus is arranged between the first casing and the third casing. The rotating shaft apparatus is arranged between the third casing and the second casing. The first casing, the second casing, and the third casing are each rotated relative to the rotating shaft apparatus, so that the first casing, the second casing, and the third casing are stacked on each other or unfolded.

### BRIEF DESCRIPTION OF DRAWINGS

FIG. 1 is a schematic structural diagram of an electronic device in an unfolded state according to an embodiment of this application;
FIG. 2 is a schematic structural diagram of an electronic device in a semi-folded state according to an embodiment of this application;
FIG. 3 is a schematic structural diagram of an electronic device in a folded state according to an embodiment of this application;
FIG. 4 is a schematic diagram of a partially exploded structure of an electronic device according to an embodiment of this application;
FIG. 5 is a partial schematic structural diagram of an electronic device according to an embodiment of this application;
FIG. 6 is an enlarged schematic diagram of a part M in FIG. 5;
FIG. 7 is a partial schematic structural diagram of a circuit board assembly according to an embodiment of this application;
FIG. 8 is a partial schematic structural diagram of a circuit board assembly according to an embodiment of this application;
FIG. 9 is a partial schematic structural diagram of a circuit board assembly according to an embodiment of this application;
FIG. 10 is a partial cross-sectional schematic structural diagram of a circuit board assembly according to an embodiment of this application;
FIG. 11 is a partial schematic structural diagram of a flexible printed circuit board according to an embodiment of this application;
FIG. 12 is a partial cross-sectional schematic structural diagram of a flexible printed circuit board according to an embodiment of this application;
FIG. 13 is a partial cross-sectional schematic structural diagram of a flexible printed circuit board according to an embodiment of this application;
FIG. 14 shows a partial structure of a flexible printed circuit board according to an embodiment of this application;
FIG. 15 is an enlarged schematic diagram of a part W in FIG. 14;
FIG. 16 is a schematic diagram of a partially exploded structure of a circuit board assembly according to an embodiment of this application;
FIG. 17 is a schematic structural diagram of an electronic device in a folded state according to an embodiment of this application;
FIG. 18 is a partial schematic structural diagram of an electronic device according to an embodiment of this application; and
FIG. 19 is a partial schematic structural diagram of an electronic device according to an embodiment of this application.

Reference numerals:
10: Electronic device;
20. Housing; 21. First casing; 22. Second casing; 23. Rotating shaft apparatus; 24. Border frame; 24a. Middle section; 241. Side frame; 241a. Break joint; 242. Top frame; 243. Bottom frame; 244. Accommodating portion; 25. Third casing;
30. Flexible display screen; 31. First display region; 32. Second display region; 33. Third display region;
40. Main circuit board;
50. First auxiliary circuit board;
60. Electrical connection line;
70. Electronic member;
80. First battery;
90. Second battery;
100. Antenna radiator;
200. Circuit board assembly; 210. Printed circuit board; 210a. Feed terminal; 210b. Ground terminal; 211. First pad; 212. Positioning portion; 213. Antenna interface pad; 214. Control signal pad; 215. Ground pad; 216. First connection region; 220. Radio frequency switch; 230. Flexible printed circuit board; 2301. Metal wire layer; 2301a. Ground line; 2301b. Radio frequency signal line; 2301c. Copper foil; 2301d. Copper plating; 2302. Electromagnetic shielding layer; 2303. Base film; 2304. Polyimide layer; 2305. Adhesive layer;
231. Second pad; 232. Pad through hole; 233. First switching section; 234. Second switching section; 235. Body;
236. First branch; 236a. First connection segment; 236b. Second connection segment; 237. Second branch; 237a. Third connection segment; 237b. Fourth connection segment; 237c. Fifth connection segment; 237d. Sixth connection segment; 238. Ground wire;
239. Second connection region;
240. Solder joint;
250. Conductive elastic member;
300. Radio frequency transceiver module;
400. Radio frequency chip;
500. Board-to-board connector;
600. Second auxiliary circuit board;
700. Third auxiliary circuit board;
800. Third battery;
X. Height direction.

### DESCRIPTION OF EMBODIMENTS

An electronic device in embodiments of this application may be referred to as user equipment (user equipment, UE), a terminal (terminal), or the like. For example, the electronic device may be a mobile terminal or a stationary terminal, such as a smart watch, a tablet computer (portable android device, PAD), a personal digital assistant (personal digital assistant, PDA), a handheld device having a wireless communication function, a computing device, an on-board device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), or a wireless terminal in a smart home (smart home). A form of the terminal device is not specifically limited in embodiments of this application.

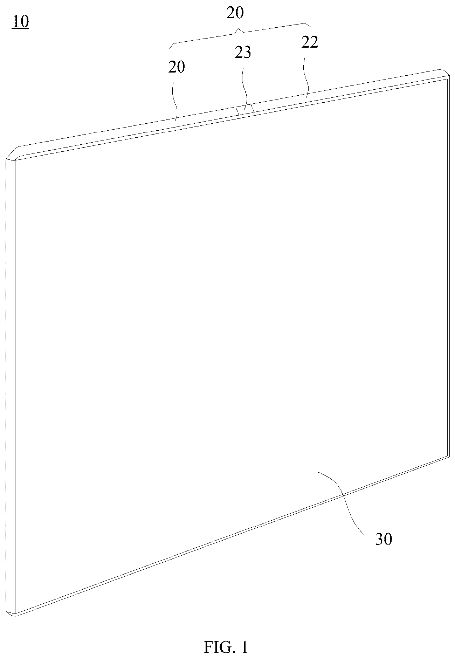

In an embodiment of this application, FIG. 1 schematically shows a structure of an electronic device 10 in an unfolded state according to an embodiment. As shown in FIG. 1, in this embodiment of this application, a description is provided by using an example in which the electronic device 10 is a handheld device having a wireless communication function. The handheld device having a wireless communication function may be, but is not limited to, a foldable screen device. In this embodiment of this application, a description is provided by using an example in which the device is the foldable screen device. The foldable screen device may be a foldable mobile phone including a foldable flexible display screen.

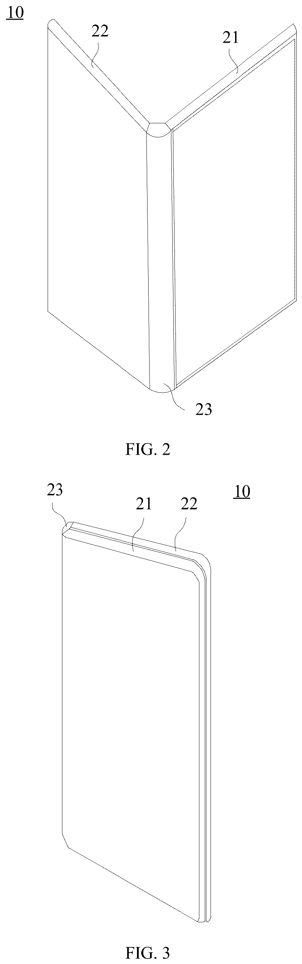

FIG. 2 schematically shows a structure of the electronic device 10 in a semi-folded state. FIG. 3 schematically shows a structure of the electronic device 10 in a folded state. As shown in FIG. 1 to FIG. 3, the electronic device 10 includes a housing 20 and a flexible display screen 30. The housing 20 may provide a mounting base for another component. The housing 20 includes a first casing 21, a second casing 22, and a rotating shaft apparatus 23. The first casing 21 and the second casing 22 are respectively connected to the rotating shaft apparatus 23. The first casing 21 and the second casing 22 may be respectively arranged at two opposite sides of the rotating shaft apparatus 23. The flexible display screen 30 is connected to the first casing 21 and the second casing 22.

The first casing 21 and the second casing 22 may be respectively rotated and folded relative to the rotating shaft apparatus 23, so that the first casing 21 and the second casing 22 are stacked on each other or unfolded. In this application, when the first casing 21 and the second casing 22 are stacked with each other, the electronic device 10 is in a folded state. When the first casing 21 and the second casing 22 are respectively away from each other in a stacked state and are unfolded to a same plane, the electronic device 10 is in the unfolded state. A process in which the first casing 21 and the second casing 22 respectively change from the folded state to the unfolded state is an unfolding process, and a process in which the first casing and the second casing change from the unfolded state to the folded state is a folding process.

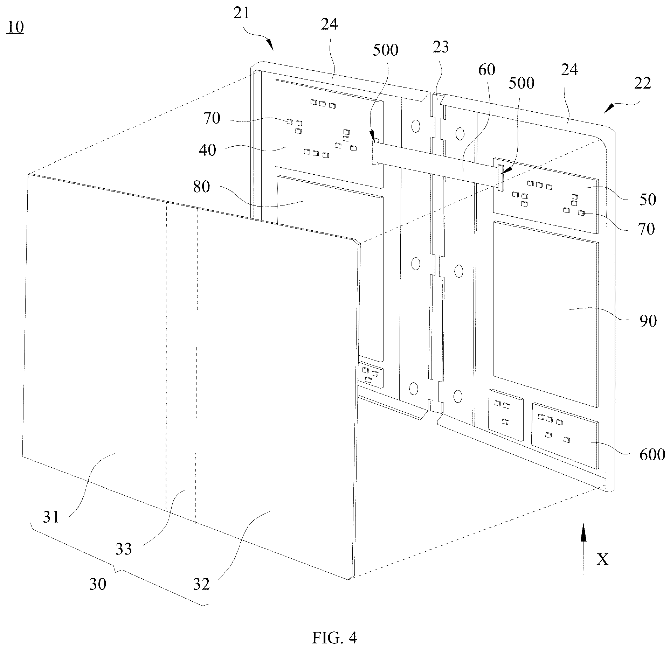

FIG. 4 schematically shows a partially exploded structure of an electronic device 10 according to this application. As shown in FIG. 4, a housing 20 includes a border frame 24. For example, the first casing 21 and the second casing 22 each may include the border frame 24. For example, the border frame 24 may include a middle frame. A flexible display screen 30 may be connected to the border frame 24. For example, the housing 20 may further include a back cover. The back cover is connected to the border frame 24.

The flexible display screen 30 includes a display portion for displaying image information. The flexible display screen 30 may be bent after an external force is applied to the flexible display screen. When the electronic device 10 is in the unfolded state, the display portion of the flexible display screen 30 is unfolded to present the image information to a user. The display portion may include a first display region 31, a second display region 32, and a third display region 33. The first display region 31 and the second display region 32 are respectively arranged corresponding to the first casing 21 and the second casing 22. The third display region 33 may be arranged corresponding to the rotating shaft apparatus 23.

When the first casing 21 and the second casing 22 are in the folded state, the display portion is in a bent state. The first display region 31 and the second display region 32 of the display portion may be stacked with each other, and the third display region 33 may bend into an arc-shaped state. For example, the third display region 33 may bend into a drop shape.

When the first casing 21 and the second casing 22 are in the unfolded state, the display portion is in the unfolded state, and the first display region 31, the second display region 32, and the third display region 33 present a flat state. The electronic device 10 may change an overall size by folding or unfolding, and may have a large display area in the unfolded state.

The electronic device 10 further includes a main circuit board 40 and a first auxiliary circuit board 50. The main circuit board 40 is arranged in the first casing 21. The first auxiliary circuit board 50 is arranged in the second casing 22. The main circuit board 40 is electrically connected to the first auxiliary circuit board 50, to implement signal interaction. For example, the electronic device 10 further includes an electrical connection line 60. The first auxiliary circuit board 50 is arranged in the second casing 22. The electrical connection line 60 is connected to the main circuit board 40 and the first auxiliary circuit board 50. The electrical connection line 60 may be arranged across the rotating shaft apparatus 23. Two ends of the electrical connection line 60 are arranged in the first casing 21 and the second casing 22 on two sides of the rotating shaft apparatus 23. For example, the electrical connection line 60 may include a flexible printed circuit board (flexible printed circuit board, FPCB). The flexible printed circuit board may include a plurality of metal wires, to transmit a plurality of different electrical signals. For example, the electronic device 10 may further include a board-to-board connector (Board-to-board Connectors). The main circuit board 40 is electrically connected to the electrical connection line 60 through the board-to-board connector. The first auxiliary circuit board 50 is electrically connected to the electrical connection line 60 through the board-to-board connector.

The electronic device 10 may further include an electronic member 70. The main circuit board 40 and the first auxiliary circuit board 50 are respectively provided with the electronic member 70. The main circuit board 40 and the first auxiliary circuit board 50 may both be printed circuit boards (Printed Circuit Board, PCB). The electronic member 70 may be welded to the main circuit board 40 or the first auxiliary circuit board 50 through a welding process.

For example, the electronic member 70 on the main circuit board 40 may include, but is not limited to, a central processing unit (Central Processing Unit, CPU), an intelligent algorithm chip, a power management chip (Power Management IC, PMIC), a radio frequency transceiver module (L-PAMiD), or a radio frequency chip (Radio Frequency Integrated Circuit, RFIC). Because the electronic device 10 has a relatively small internal space, the electronic member 70 is highly integrated on the main circuit board 40 to sufficiently reduce a volume of the main circuit board 40 and reduce a space occupancy rate of the main circuit board 40.

The electronic device 10 may further include a battery. The battery may be arranged in the housing 20. The battery is a structural member that can convert chemical energy to electrical energy. The battery is configured to provide electrical energy to the electronic device 10 to ensure a normal operation of the electronic device 10. For example, the battery may supply electrical energy to the flexible display screen 30, to cause the flexible display screen 30 to display image information or complete corresponding operation instructions. Alternatively, the battery assembly may supply electrical energy to the electronic member 70, to ensure normal operation of the electronic member 70. For example, the battery may be a lithium ion battery, such as a lithium iron phosphate battery.

For example, the electronic device 10 may include a first battery 80 and a second battery 90. The first battery 80 is arranged in the first casing 21. Along a height direction X of the electronic device 10, the main circuit board 40 is located on a side of the first battery 80 close to a top of the electronic device 10. The second battery 90 is arranged in the second casing 22. Along a height direction X of the electronic device 10, the first auxiliary circuit board 50 is located on a side of the second battery 90 close to a top of the electronic device 10. It should be noted that a height direction X along the electronic device 10 may refer to a direction from a bottom to a top of the electronic device 10 when the electronic device 10 is in a normal use state. The bottom of the electronic device 10 is close to the user, and the top of the electronic device 10 is relatively away from the user.

The electronic device 10 further includes an antenna radiator. The antenna radiator is configured to receive or transmit an electromagnetic wave signal, so that the electronic device 10 implements a wireless communication function. The antenna radiator may be arranged in the housing 20, so that the antenna radiator can obtain relatively good antenna efficiency. For example, the antenna radiator may be arranged on the border frame 24 of the housing 20. The antenna radiator may be electrically connected to the main circuit board 40. The electronic device 10 further includes a radio frequency switch. The radio frequency switch is electrically connected to the antenna radiator. The radio frequency switch is configured to turn on any one or more of a plurality of radio frequency signals through a control logic to enable switching between different signal paths. The radio frequency switch may be configured to implement switching between reception and transmission of the radio frequency signal. The radio frequency switch may also be configured to implement switching between different frequency bands.

In the related technology, the radio frequency switch is arranged on the main circuit board 40. The radio frequency switch is electrically connected to the antenna radiator through a radio frequency cable, to implement signal interaction. A single radio frequency cable has a relatively large diameter. For example, the diameter of the single radio frequency cable may be 0.8 millimeters. A relatively large spacing exists between the radio frequency switch and the antenna radiator, so that the radio frequency cable has a relatively long length. Therefore, a case where an external electromagnetic field causes coupling interference to a signal transmitted in the radio frequency cable exists, causing an antenna signal of the antenna radiator to be unstable, and affecting usage experience of the electronic device 10. A plurality of radio frequency cables usually need to be arranged between the radio frequency switch and the antenna radiator. The plurality of radio frequency cables need to pass through a gap between the battery and the border frame 24. With the diversification of functional requirements for the electronic device 10, increasingly more types and quantities of functional devices are required, resulting in a relatively narrow internal space of the electronic device 10. Rationality of a layout of each device and a capacity of the battery restrict and affect each other. For example, on the premise of ensuring the rationality of the layout of the radio frequency cables, a relatively large quantity of radio frequency cables may occupy more space, and the space for arranging the radio frequency cables needs to be released by reducing a size of a battery, which may lead to a decrease in the capacity of the battery.

According to the electronic device 10 provided in this embodiment of this application, the radio frequency switch may be arranged near the antenna radiator, to effectively shorten the spacing therebetween and shorten a signal transmission path, which helps reduce a possibility that an external electromagnetic field causes coupling interference to a signal transmitted between the antenna radiator and the radio frequency switch, thereby ensuring stability of the antenna signal. Through a structure combining the printed circuit board and the flexible printed circuit board, the printed circuit board can be electrically connected to the flexible printed circuit board without using the board-to-board connector, thereby effectively reducing a size of a joint of the printed circuit board and the flexible printed circuit board and reducing a space occupancy rate. In this way, the structure may be suitably arranged in a relatively small gap.

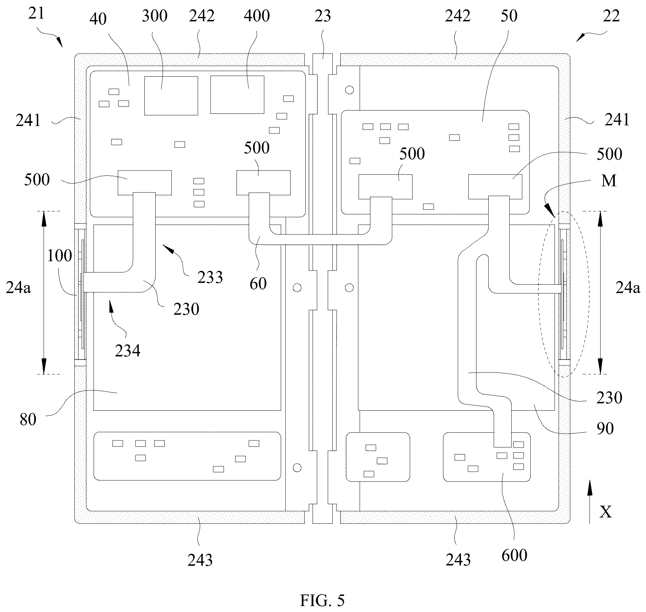

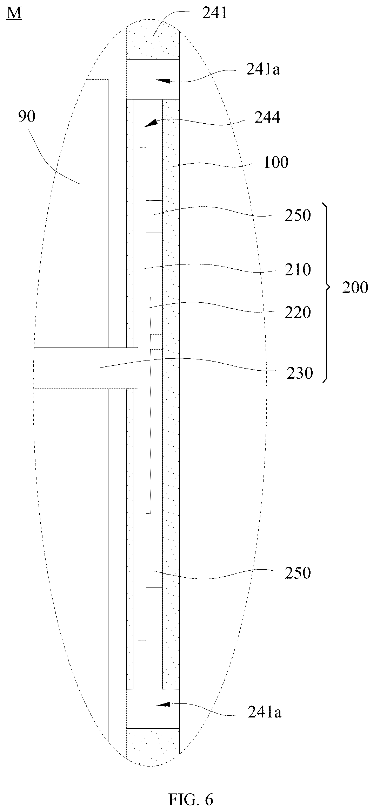

FIG. 5 schematically shows a partial structure of an electronic device 10 according to this application. FIG. 6 is an enlarged view of a part M in FIG. 5. As shown in FIG. 5 and FIG. 6, the electronic device 10 in this embodiment of this application includes a housing 20 and a circuit board assembly 200. A border frame 24 of the housing 20 includes an antenna radiator 100. The antenna radiator 100 includes a feed point and a ground point (not shown in the figure). The circuit board assembly 200 is arranged in the housing 20. The circuit board assembly 200 includes a printed circuit board 210 and a flexible printed circuit board 230. A spacing is defined between the printed circuit board 210 in the circuit board assembly 200 and a main circuit board 40. The printed circuit board 210 in the circuit board assembly 200 and the main circuit board 40 are independently arranged. The printed circuit board 210 is arranged facing the antenna radiator 100. A position of the printed circuit board 210 is arranged corresponding to a position of the antenna radiator 100, so that a spacing between the printed circuit board 210 and the antenna radiator 100 is relatively small.

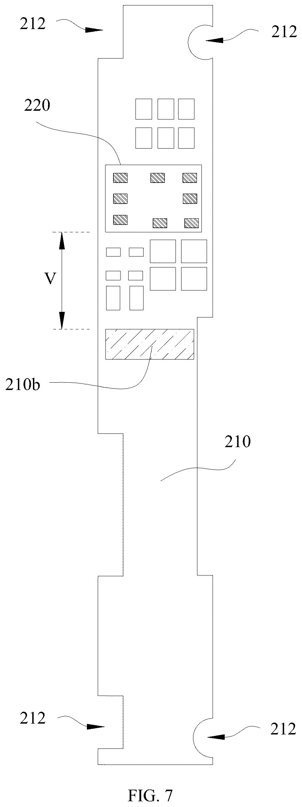

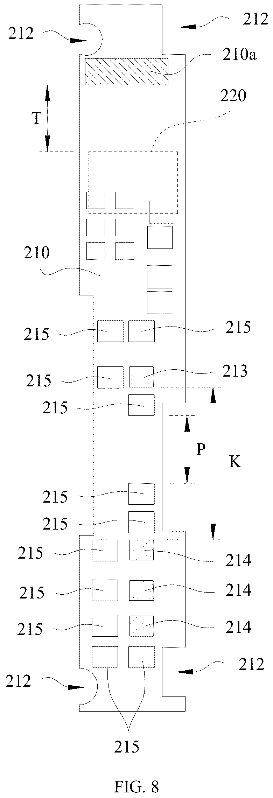

FIG. 7 and FIG. 8 respectively schematically show a partial structure of a circuit board assembly 200. As shown in FIG. 5 to FIG. 8, the printed circuit board 210 includes a feed terminal 210a and a ground terminal 210b. A feed point of the antenna radiator 100 is electrically connected to the feed terminal 210a of the printed circuit board 210. The feed terminal 210a of the printed circuit board 210 may feed a wireless signal to the antenna radiator 100 through the feed point, so that the antenna radiator 100 radiates the wireless signal. A ground point of the antenna radiator 100 is electrically connected to the ground terminal 210b of the printed circuit board 210.

The circuit board assembly 200 further includes a radio frequency switch 220. The radio frequency switch 220 is arranged on the printed circuit board 210. The radio frequency switch 220 is electrically connected to the antenna radiator 100. Due to a relatively small spacing between the printed circuit board 210 and the antenna radiator 100, a position of the radio frequency switch 220 is relatively near the antenna radiator 100, so that a spacing between the radio frequency switch 220 and the antenna radiator 100 is relatively small, which helps shorten a signal transmission path between the radio frequency switch 220 and the antenna radiator 100.

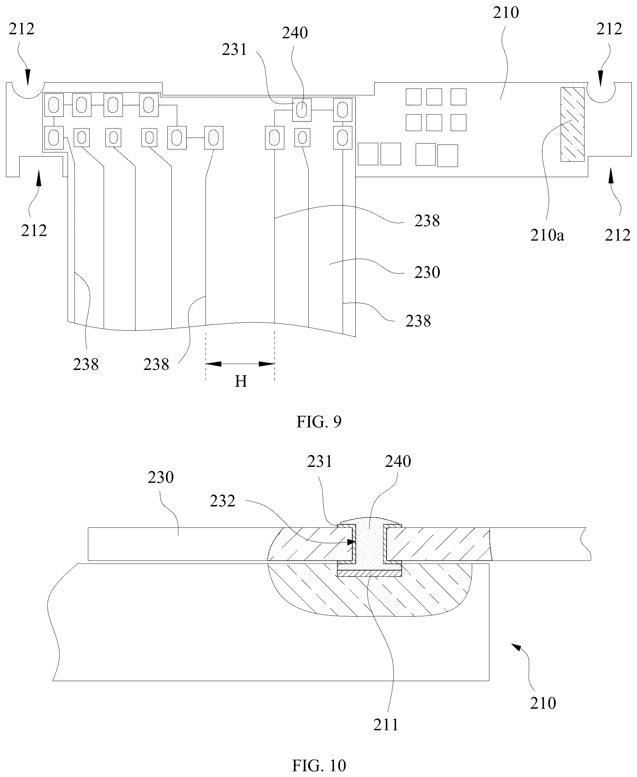

In some implementations, FIG. 9 schematically shows a partial structure of a circuit board assembly 200 according to this application. FIG. 10 schematically shows a partial cross-sectional structure of a circuit board assembly 200 according to this application. Referring to FIG. 9 and FIG. 10, a printed circuit board 210 and a flexible printed circuit board 230 are processed and manufactured separately, and assembled to form an integral structure. The printed circuit board 210 includes a first pad 211. The flexible printed circuit board 230 includes a second pad 231. The first pad 211 is arranged facing the second pad 231, so that a position of the first pad 211 and a position of the second pad 231 correspond to each other. For example, a material of the first pad 211 may be copper or a copper alloy. A material of the second pad 231 may be copper or a copper alloy. The second pad 231 has a pad through hole 232. The second pad 231 includes a hollow metal cylinder. A central hole of the metal cylinder forms the pad through hole 232. A material of the metal cylinder may be copper or a copper alloy. Along a thickness direction of the flexible printed circuit board 230, the pad through hole 232 of the second pad 231 is a through hole extending through the flexible printed circuit board 230. The first pad 211 is arranged facing the pad through hole 232. For example, the pad through hole 232 may be a circular hole. A diameter of the pad through hole 232 may be, but is not limited to, 0.045 millimeters, 0.15 millimeters, 0.2 millimeters, 0.4 millimeters, or 0.45 millimeters. For example, along an axial direction of the pad through hole 232, an outer edge of an orthographic projection of the first pad 211 coincides with an outer edge of an orthographic projection of the second pad 231. In other words, the outer edge of the orthographic projection of the first pad 211 has a same shape as the outer edge of the orthographic projection of the second pad 231.

The circuit board assembly 200 further includes a solder joint 240. The solder joint 240 is connected to the first pad 211 and the second pad 231. Apart of the solder joint 240 is located in the pad through hole 232, which helps increase a connection area between the solder joint 240 and the second pad 231, so as to improve connection strength between the solder joint 240 and the second pad 231, so that the solder joint 240 and the second pad 231 are not easily separated.

For example, a part of the solder joint 240 is located between the first pad 211 and the second pad 231.

For example, a part of the solder joint 240 is located on a side of the flexible printed circuit board 230 facing away from the first pad 211, so as to cover the pad through hole 232 of the second pad 231.

For example, a solder paste is preset on the first pad 211 of the printed circuit board 210. The flexible printed circuit board 230 is placed at a corresponding predetermined position, so that the second pad 231 corresponds to the first pad 211. The solder paste is heated to melt the solder paste. The melted solder paste may rise along the pad through hole 232 of the second pad 231. The melted solder paste solidifies to form the solder joint 240 connecting the first pad 211 to the second pad 231.

The printed circuit board 210 is electrically connected to the flexible printed circuit board 230 through a connection structure of the first pad 211, the solder joint 240, and the second pad 231, so that the printed circuit board 210 and the flexible printed circuit board 230 can be electrically connected without using a board-to-board connector, thereby effectively reducing a thickness of a joint of the printed circuit board 210 and the flexible printed circuit board 230, and reducing a space occupancy rate. Then, the circuit board assembly 200 may be suitably arranged in a relatively small gap, to make full use of an internal space of the electronic device 10.

In some implementations, in the circuit board assembly 200, the printed circuit board 210 and the flexible printed circuit board 230 may be integrally formed. The printed circuit board 210 and the flexible printed circuit board 230 are combined to form an integral rigid-flex board. The flexible printed circuit board 230 is directly led out from the printed circuit board 210. The printed circuit board 210 and the flexible printed circuit board 230 can be connected without using the connection structure, so that the joint of the printed circuit board 210 and the flexible printed circuit board 230 has a relatively small thickness, thereby reducing the space occupancy rate.

The thickness of the joint of the printed circuit board 210 and the flexible printed circuit board 230 is relatively small, so that a space can be released at the joint of the printed circuit board 210 and the flexible printed circuit board 230. For example, the released space may be used for increasing a size of a battery, to improve a capacity of the battery. For example, compared with a manner that the printed circuit board 210 is electrically connected to the flexible printed circuit board 230 through the board-to-board connector, the size of the battery may be increased by 2 millimeters, and the capacity of the battery may be relatively increased by 300 milliampere hours (mAh).

The circuit board assembly 200 is separately arranged in the electronic device 10 of embodiments of this application. The printed circuit board 210 in the circuit board assembly 200 is arranged near the antenna radiator 100 of the border frame 24, so that a spacing between the radio frequency switch 220 arranged on the printed circuit board 210 and the antenna radiator 100 is effectively shortened, thereby shortening a signal transmission path between the radio frequency switch 220 and the antenna radiator 100. This helps reduce a possibility that an external electromagnetic field causes coupling interference to a signal transmitted between the radio frequency switch 220 and the antenna radiator 100, thereby ensuring stability of an antenna signal, and improving antenna efficiency. The printed circuit board 210 in the circuit board assembly 200 is electrically connected to the main circuit board 40 through the flexible printed circuit board 230. The printed circuit board 210 is connected to the flexible printed circuit board 230 through the first pad 211, the solder joint 240, and the second pad 231, or the printed circuit board 210 and the flexible printed circuit board 230 are integrally formed. Therefore, on one hand, the thickness of the joint of the printed circuit board 210 and the flexible printed circuit board 230 is effectively reduced, and the printed circuit board 210 is suitably arranged in a relatively narrow space, to make full use of an internal space of the electronic device 10. On the other hand, if the printed circuit board 210 is connected to the flexible printed circuit board 230 through a board-to-board connector, because the board-to-board connector has a high grounding impedance, an impedance discontinuity point is formed at the board-to-board connector, at which a sudden impedance change exists, which easily causes coupling with an external electromagnetic field and interferes with a signal transmitted between the printed circuit board 210 and the flexible printed circuit board 230. Therefore, compared with a connection manner of the board-to-board connector, the structure of the printed circuit board 210 and the flexible printed circuit board 230 of this application helps eliminate resistance discontinuity, so that signal isolation can be improved, a possibility of coupling interference is effectively reduced. In addition, insertion loss is helped to reduce and antenna efficiency is improved. It should be noted that the isolation is used for quantitatively representing strength of electromagnetic coupling in a unit of dB.

The radio frequency switch 220 in this embodiment of this application is arranged on the printed circuit board 210. The printed circuit board 210 is connected to the flexible printed circuit board 230 by using the first pad 211, the solder joint 240, and the second pad 231, or the printed circuit board 210 is integrally formed with the flexible printed circuit board 230. This also helps improve the signal isolation between the radio frequency switch 220 and a power supply connected to the radio frequency switch 220.

In this embodiment of this application, the electronic device 10 further includes a radio frequency transceiver module 300 and a radio frequency chip 400. The radio frequency transceiver module 300 and the radio frequency chip 400 are both arranged on the main circuit board 40. The radio frequency transceiver module 300 may be an integrated module including components such as a duplexer, a filter, a power amplifier, and a low noise amplifier, so that the radio frequency transceiver module 300 has a relatively small size, which helps reduce an area of the main circuit board 40. The radio frequency transceiver module 300 is electrically connected to the radio frequency chip 400. The flexible printed circuit board 230 is electrically connected to the radio frequency transceiver module 300, so as to implement signal interaction among the antenna radiator 100, the radio frequency switch 220, the printed circuit board 210, the flexible printed circuit board 230, the main circuit board 40, the radio frequency transceiver module 300, and the radio frequency chip 400.

The electronic device 10 further includes a board-to-board connector 500. The flexible printed circuit board 230 is electrically connected to the main circuit board 40 through the board-to-board connector 500, to implement signal interaction between the flexible printed circuit board 230 and the main circuit board 40. The board-to-board connector 500 includes a first connector and a second connector that can be plug-connected to each other. One of the first connector and the second connector may be connected to the flexible printed circuit board 230, and the other may be connected to the main circuit board 40. For example, the first connector is connected to an end of the flexible printed circuit board 230. A pin of the first connector may be welded to a corresponding metal wire on the flexible printed circuit board 230. The second connector is connected to the main circuit board 40. A pin of the second connector may be welded to a corresponding metal wire on the main circuit board 40. The first connector and the second connector are detachably connected. Therefore, the flexible printed circuit board 230 is helped to separate from or assemble with the main circuit board 40.

In this embodiment of this application, the antenna radiator 100 may be arranged in a middle section 24a of the border frame 24 along the height direction X of the electronic device 10. For example, along the height direction X of the electronic device 10, a middle one-third region on the border frame 24 may be the middle section 24a of the border frame 24.

In embodiments of this application, the border frame 24 may be a metal frame. A material of the border frame 24 may be an aluminum alloy or steel. A part of the border frame 24 may form the antenna radiator 100. Alternatively, the border frame 24 includes an isolating frame body. The antenna radiator 100 is arranged on the isolating frame body. A material of the isolating frame body may be plastic. The antenna radiator 100 may be a metal sheet.

When the electronic device 10 is in the folded state or the unfolded state, the user usually holds a region close to the bottom on the electronic device 10. The antenna radiator may also be arranged in a top region and a bottom region of the electronic device 10. Therefore, a hand of the user may block the antenna radiator in the bottom region. In this way, a handheld position of the user may have an adverse impact on the antenna signal of the antenna radiator in the bottom region, causing differences in the antenna signals. In this embodiment of this application, the antenna radiator 100 is arranged in the middle section 24a of the border frame 24. In other words, the antenna radiator 100 is arranged in a middle region of the border frame 24. Therefore, when the user holds the electronic device 10 in the folded state or the unfolded state, the user does not easily block the antenna radiator 100 located in the middle section 24a of the border frame 24 with the hand. This helps reduce a possibility that a handheld position of the user causes an adverse effect on an antenna signal of the antenna radiator, thereby ensuring that the antenna radiator of the electronic device 10 in the folded state or the unfolded state can obtain signal transmission of relatively high quality, and improving satisfaction of usage experience of the electronic device 10.

In this embodiment of this application, as shown in FIG. 5 and FIG. 6, the border frame 24 may include a side frame 241. The side frame 241 extends along the height direction X of the electronic device 10. The border frame 24 may further include a top frame 242 and a bottom frame 243. Along the height direction X of the electronic device 10, the top frame 242 and the bottom frame 243 are spaced apart from each other. The top frame 242 and the bottom frame 243 are respectively connected to the side frame 241. The antenna radiator 100 is arranged in the middle section of the side frame 241 along the height direction X of the electronic device 10.

For example, the top frame 242 of the border frame 24 may be provided with the antenna radiator 100, and the bottom frame 243 of the border frame 24 may also be provided with the antenna radiator 100. This is not specifically limited in this application.

For example, along the height direction X of the electronic device 10, a middle one-third region on the side frame 241 may be the middle section of the side frame 241.

The border frame 24 includes a break joint 241a. Two ends of the antenna radiator 100 are respectively provided with the break joint 241a along the height direction X of the electronic device 10, so that the antenna radiator 100 may be located between two break joints 241a. For example, the side frame 241 may include the break joint 241a. the break joint 241a may be arranged in the middle section of the side frame 241.

For example, when the first casing 21 and the second casing 22 are in a state of being stacked each other, along a direction in which the first casing 21 and the second casing 22 are stacked, an orthographic projection of the antenna radiator 100 on the first casing 21 does not overlap with an orthographic projection of the antenna radiator 100 on the second casing 22, thereby helping reduce a possibility that the antenna radiator 100 on the first casing 21 and the antenna radiator 100 on the second casing 22 interfere with each other.

The border frame 24 has an accommodating portion 244. At least part of the printed circuit board 210 is arranged in the accommodating portion 244 of the border frame 24. On one hand, the printed circuit board 210 may make full use of the border frame 24 and does not occupy a space at an inner side of the border frame 24, which helps save a space at the inner side of the border frame 24. For example, the saved space can be used for increasing the size of the battery. On the other hand, the border frame 24 may provide protection to the printed circuit board 210, reducing a possibility of damage caused by crushing or collision of the printed circuit board 210. For example, the printed circuit board 210 may be arranged in the accommodating portion 244 of the border frame 24 as a whole, so that the joint between the printed circuit board 210 and the flexible printed circuit board 230 is located in the accommodating portion 244. The border frame 24 may protect the printed circuit board 210 and the joint of the printed circuit board 210 and the flexible printed circuit board 230, reducing a possibility of cracking when the joint of the printed circuit board 210 and the flexible printed circuit board 230 is crushed or collided. The feed point and the ground point of the antenna radiator 100 may be arranged facing the accommodating portion 244. The feed terminal 210a and the ground terminal 210b arranged on the printed circuit board 210 may be located in the accommodating portion 244 of the border frame 24. For example, the accommodating portion 244 may be an accommodating groove.

For example, the printed circuit board 210 includes a positioning portion 212 (as shown in FIG. 7). The border frame 24 includes a limiting portion (not shown in the figure). The positioning portion 212 of the printed circuit board 210 is connected to the limiting portion of the border frame 24, so that the printed circuit board 210 can be quickly and accurately positioned, thereby facilitating assembly of the printed circuit board 210 and the border frame 24. In addition, the border frame 24 can restrain the printed circuit board 210 to prevent the printed circuit board 210 from exiting from the accommodating portion 244. For example, the printed circuit board 210 may be provided with a notch at an edge. The provided notch forms the positioning portion 212. A protruding post located in the accommodating portion 244 is arranged on the border frame 24. The protruding post forms the limiting portion. The gap of the printed circuit board 210 may be engaged with the protruding post on the border frame 24, to accurately position the printed circuit board 210.

The circuit board assembly 200 further includes a conductive elastic member 250. The conductive elastic member 250 has an electrically-conductive property, and may be elastically deformed under a force. The conductive elastic member 250 is arranged between the feed point of the antenna radiator 100 and the feed terminal 210a of the printed circuit board 210. The conductive elastic member 250 is arranged between the ground point of the antenna radiator 100 and the ground terminal 210b of the printed circuit board 210. The antenna radiator 100 and the printed circuit board 210 may jointly apply a force to the conductive elastic member 250. The conductive elastic member 250 can ensure reliability of an electrical connection between the feed point and the feed terminal 210a and reliability of an electrical connection between the ground point and the ground terminal 210b.

For example, the conductive elastic member 250 is located in the accommodating portion 244 of the border frame 24.

For example, the feed terminal 210a of the printed circuit board 210 is located on a side of the printed circuit board 210 facing away from the antenna radiator 100. The ground terminal 210b of the printed circuit board 210 is located on a side of the printed circuit board 210 facing the antenna radiator 100.

For example, the conductive elastic member 250 may be a spring. One end of the conductive elastic member 250 may be welded to the printed circuit board 210, for example, welded to the feed terminal 210a or the ground terminal 210b. An other end of the conductive elastic member 250 may abut against the feed point or the ground point of the antenna radiator 100. For example, a material of the conductive elastic member 250 may be, but is not limited to, copper or a copper alloy.

In some implementations, the conductive elastic member 250 may be arranged between the radio frequency switch 220 and the antenna radiator 100. The radio frequency switch 220 is electrically connected to the antenna radiator 100 through the conductive elastic member 250. Therefore, the radio frequency switch 220 can be electrically connected to the antenna radiator 100 without using the radio frequency cable, which helps reduce the space occupancy rate of the printed circuit board 210.

Along a thickness direction of the printed circuit board 210, the radio frequency switch 220 is arranged on a side of the printed circuit board 210 facing the antenna radiator 100. The radio frequency switch 220 is relatively near the antenna radiator 100, thereby helping implement an electrical connection between the radio frequency switch 220 and the antenna radiator 100.

As shown in FIG. 7 and FIG. 8, in the printed circuit board 210, a spacing is defined between the radio frequency switch 220 and the feed terminal 210a, thereby helping reduce a possibility of signal crosstalk between the radio frequency switch 220 and the feed terminal 210a. A value of a spacing T between the radio frequency switch 220 and the feed terminal 210a is in a range of 15 millimeters to 100 millimeters. For example, the spacing between the radio frequency switch 220 and the feed terminal 210a may be 20 millimeters, 30 millimeters, 50 millimeters, or 70 millimeters.

In the printed circuit board 210, a spacing is defined between the radio frequency switch 220 and the ground terminal 210b, thereby helping reduce a possibility of signal crosstalk between the radio frequency switch 220 and the ground terminal 210b. A value of a spacing V between the radio frequency switch 220 and the ground terminal 210b may be in a range of 15 millimeters to 100 millimeters. For example, the spacing between the radio frequency switch 220 and the ground terminal 210b may be 20 millimeters, 30 millimeters, 50 millimeters, or 70 millimeters.

The printed circuit board 210 includes an antenna interface pad 213, a control signal pad 214, and a ground pad 215. The antenna interface pad 213 is configured to be electrically connected to the antenna radiator 100. A periphery of the antenna interface pad 213 is provided with a plurality of ground pads 215, so as to help reduce a possibility that the antenna interface pad 213 is interfered with by an external signal. A periphery of the control signal pad 214 is provided with a plurality of ground pads 215, so as to help reduce a possibility that the control signal pad 214 is interfered with by an external signal.

For example, a minimum spacing K between the antenna interface pad 213 and the control signal pad 214 is greater than or equal to 3 millimeters.

For example, a minimum spacing P between each of the ground pads 215 on the periphery of the antenna interface pad 213 and each of the ground pads 215 on the periphery of the control signal pad 214 is greater than or equal to 2 millimeters.

For example, as shown FIG. 9, a ground wire 238 connected to the ground pad 215 is arranged on the flexible printed circuit board 230. A minimum spacing H between each of the ground wire 238 on the periphery of the antenna interface pad 213 and each of the ground wire 238 on the periphery of the control signal pad 214 is greater than or equal to 3 millimeters. For example, the first pad 211 includes the antenna interface pad 213, the control signal pad 214, and the ground pad 215. The flexible printed circuit board 230 is provided with the second pad 231 respectively connected to the antenna interface pad 213, the control signal pad 214, and the ground pad 215. In the flexible printed circuit board 230, the ground wire 238 is connected to the corresponding second pad 231.

For example, in the ground wire 238 connected to each ground pad 215 on the periphery of the antenna interface pad 213, a width of the ground wire 238 close to the control signal pad 214 is greater than or equal to 0.1 millimeters.

As shown in FIG. 5, the electronic device 10 further includes the first battery 80. The first battery 80 is arranged in the first casing 21. The first battery 80 is arranged below the flexible display screen 30. Along a height direction X of the electronic device 10, the main circuit board 40 is located on a side of the first battery 80 close to a top of the electronic device 10. Along the thickness direction of the electronic device 10, at least part of the flexible printed circuit board 230 in the first casing 21 is located on a side of the first battery 80, so that the flexible printed circuit board 230 may be arranged by using a gap between the first battery 80 and another structural member, which helps improve a utilization rate of an internal space of the electronic device 10. For example, at least part of the flexible printed circuit board 230 in the first casing 21 may be located on a side of the first battery 80 facing the flexible display screen 30.

For example, the flexible printed circuit board 230 in the first casing 21 includes a first switching section 233 and a second switching section 234. The first switching section 233 is intersected with the second switching section 234. The first switching section 233 is electrically connected to the main circuit board 40. For example, the first switching section 233 may be electrically connected to the main circuit board 40 through the board-to-board connector 500. The second switching section 234 is electrically connected to the printed circuit board 210. For example, the second pad 231 is arranged on the second switching section 234. The solder joint 240 is connected to the first pad 211 of the printed circuit board 210 and the second pad 231 of the second switching section 234. Along the thickness direction of the electronic device 10, at least part of the first switching section 233 may be located on a side of the first battery 80. At least part of the second switching section 234 may be located on a side of the first battery 80.

The printed circuit board 210 in the first casing 21 is located on a side the first battery 80 facing the antenna radiator 100. To be specific, the printed circuit board 210 is located between the first battery 80 and the antenna radiator 100. For example, the radio frequency switch 220 in the first casing 21 may be arranged on a side of the printed circuit board 210 facing away from the first battery 80. In this embodiment of this application, the printed circuit board 210 has a relatively small thickness, and the printed circuit board 210 may be connected to the flexible printed circuit board 230 through the solder joints 240. Therefore, the joint of the printed circuit board 210 and the flexible printed circuit board 230 has a relatively small thickness, thereby releasing a space. For example, the released space may be used for increasing the size of the first battery 80, so as to improve a capacity of the first battery 80.

The electronic device 10 further includes the second battery 90. The second battery 90 is arranged in the second casing 22. The second battery 90 is arranged below the flexible display screen 30. Along the thickness direction of the electronic device 10, at least part of the flexible printed circuit board 230 in the second casing 22 is located on a side of the second battery 90, so that the flexible printed circuit board 230 may be arranged by using a gap between the second battery 90 and another structural member, which helps improve a utilization rate of an internal space of the electronic device 10. For example, at least part of the flexible printed circuit board 230 in the second casing 22 may be located on a side of the second battery 90 facing the flexible display screen 30. The printed circuit board 210 in the second casing 22 is located on a side the second battery 90 facing the antenna radiator 100. To be specific, the printed circuit board 210 is located between the second battery 90 and the antenna radiator 100. For example, the radio frequency switch 220 in the second casing 22 may be arranged on a side of the printed circuit board 210 facing away from the second battery 90. In this embodiment of this application, the printed circuit board 210 has a relatively small thickness, and the printed circuit board 210 may be connected to the flexible printed circuit board 230 through the solder joints 240. Therefore, the joint of the printed circuit board 210 and the flexible printed circuit board 230 has a relatively small thickness, thereby releasing a space. For example, the released space may be used for increasing the size of the second battery 90, so as to improve a capacity of the second battery 90.

The electronic device 10 further includes a first auxiliary circuit board 50 and an electrical connection line 60. The first auxiliary circuit board 50 is arranged in the second casing 22. Along the height direction X of the electronic device 10, the first auxiliary circuit board 50 may be arranged close to the top of the electronic device 10. The electrical connection line 60 is connected to the main circuit board 40 and the first auxiliary circuit board 50. The flexible printed circuit board 230 in the second casing 22 is electrically connected to the first auxiliary circuit board 50. The printed circuit board 210 in the second casing 22 is electrically connected to the first auxiliary circuit board 50 through the flexible printed circuit board 230.

For example, the electronic device 10 further includes a board-to-board connector 500. The main circuit board 40 may be electrically connected to the electrical connection line 60 through the board-to-board connector 500. The first auxiliary circuit board 50 may be electrically connected to the electrical connection line 60 through the board-to-board connector 500. The flexible printed circuit board 230 in the second casing 22 is electrically connected to the first auxiliary circuit board 50 through the board-to-board connector 500.

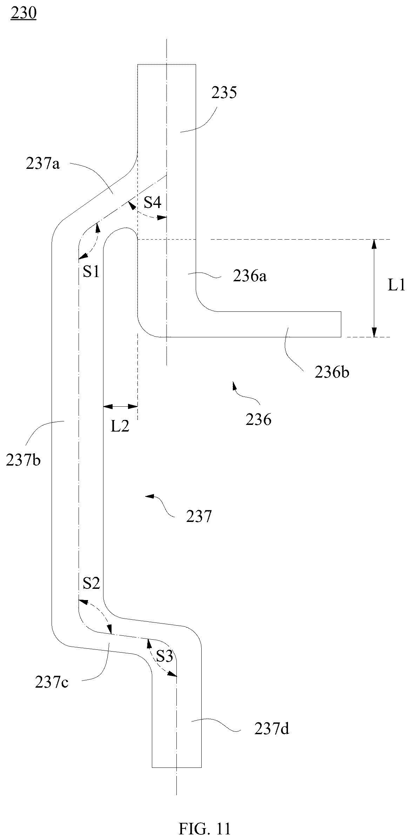

The electronic device 10 further includes a second auxiliary circuit board 600. The second auxiliary circuit board 600 is arranged in the second casing 22. Along the height direction X of the electronic device 10, the first auxiliary circuit board 50 is arranged close to the top of the electronic device 10. The second auxiliary circuit board 600 is arranged close to the bottom of electronic device 10. FIG. 11 schematically shows a partial structure of a flexible printed circuit board 230. As shown in FIG. 5, FIG. 6, and FIG. 11, the flexible printed circuit board 230 in the second casing 22 includes a body 235, a first branch 236, and a second branch 237. The body 235 is electrically connected to the first auxiliary circuit board 50. The first branch 236 is connected to the printed circuit board 210 in the second casing 22. The second branch 237 is electrically connected to the second auxiliary circuit board 600.

For example, the second auxiliary circuit board 600 may be arranged corresponding to a sound cavity of the electronic device 10. The sound cavity is arranged close to the bottom of the electronic device 10 along the height direction X of the electronic device 10. When the user uses a loudspeaker, the sound cavity may be configured to transmit a sound outward. The second auxiliary circuit board 600 may be located on a side of the sound cavity along the thickness direction of the electronic device 10.

For example, the second battery 90 is arranged between the first auxiliary circuit board 50 and the second auxiliary circuit board 600 along the height direction X of the electronic device 10.

For example, along the thickness direction of the electronic device 10, at least part of the first branch 236 is located on a side of the second battery 90. At least part of the second branch 237 may be located on a side of the second battery 90.

The first branch 236 includes a first connection segment 236a and a second connection segment 236b that intersect each other. The first connection segment 236a is connected to the body 235. The second connection segment 236b is electrically connected to the printed circuit board 210. For example, an included angle between the first connection segment 236a and the second connection segment 236b may be greater than or equal to 90°, which helps reduce a possibility that a tear occurs to the first connection segment 236a and the second connection segment 236b at a junction therebetween as a result of the first connection segment 236a or the second connection segment 236b being subjected to a pull force.

For example, along the height direction X of the electronic device 10, a spacing L1 between the body 235 and an edge of the second connection segment 236b close to the second auxiliary circuit board 600 is greater than or equal to 5 millimeters.

The second branch 237 includes a third connection segment 237a, a fourth connection segment 237b, a fifth connection segment 237c, and a sixth connection segment 237d that are connected in sequence. The third connection segment 237a is intersected with the fourth connection segment 237b. The fourth connection segment 237b is intersected with the fifth connection segment 237c. The fifth connection segment 237c is intersected with the sixth connection segment 237d. The sixth connection segment 237d is electrically connected to the second auxiliary circuit board 600. An included angle S1 between the third connection segment 237a and the fourth connection segment 237b is greater than or equal to 90°, which helps reduce a possibility that a tear occurs to the third connection segment 237a and the fourth connection segment 237b at a junction therebetween as a result of the third connection segment 237a or the fourth connection segment 237b being subjected to a pull force. An included angle S2 between the fourth connection segment 237b and the fifth connection segment 237c is greater than or equal to 90°, which helps reduce a possibility that a tear occurs to the fourth connection segment 237b and the fifth connection segment 237c at a junction therebetween as a result of the fourth connection segment 237b or the fifth connection segment 237c being subjected to a pull force. An included angle S3 between the fifth connection segment 237c and the sixth connection segment 237d is greater than or equal to 90°, which helps reduce a possibility that a tear occurs to the fifth connection segment 237c and the sixth connection segment 237d at a junction therebetween as a result of the fifth connection segment 237c or the sixth connection segment 237d being subjected to a pull force.

For example, the second branch 237 includes the third connection segment 237a. The third connection segment 237a is connected to the body 235. An included angle S4 between the first connection segment 236a and the third connection segment 237a of the first branch 236 is in a range of 30° to 150°. If an included angle S4 between the first connection segment 236a and the third connection segment 237a is less than 30°, a tear easily occurs to the first connection segment 236a and the third connection segment 237a at a junction therebetween when the first connection segment 236a and the third connection segment 237a are subjected to an external pulling force. If the included angle S4 between the first connection segment 236a and the third connection segment 237a is greater than 150°, the first connection segment 236a and the third connection segment 237a occupy an excessive space, which does not help arrange the flexible printed circuit board 230 in a narrow space.

For example, a minimum spacing L2 between the first connection segment 236a and the fourth connection segment 237b is greater than or equal to 3 millimeters.

For example, the third connection segment 237a has a narrowed width portion. The narrowed width portion is connected to the fourth connection segment 237b.

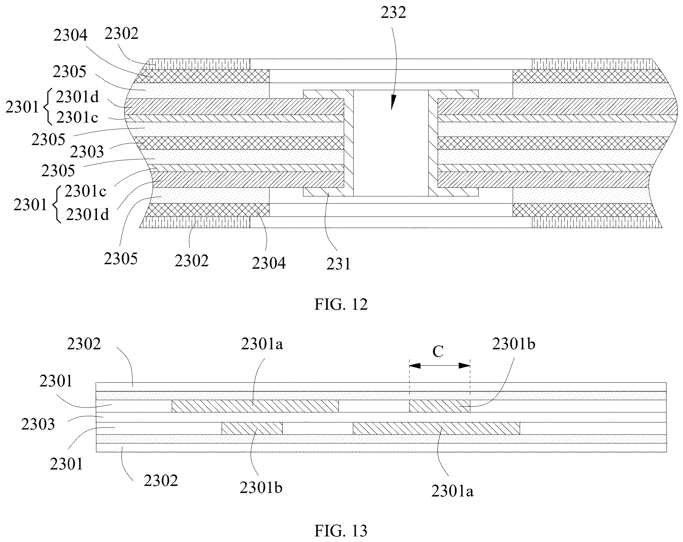

The flexible printed circuit board 230 may include at least two metal wire layers. For example, FIG. 12 schematically shows a partial cross-sectional structure of a flexible printed circuit board 230. As shown in FIG. 12, the flexible printed circuit board 230 includes two metal wire layers 2301. The flexible printed circuit board 230 includes a flexible copper clad laminate and a shielding layer. The shielding layer is arranged on each of two opposite sides of the flexible copper clad laminate along a thickness direction of the flexible printed circuit board 230. The shielding layer may include an electromagnetic shielding layer 2302. The flexible copper clad laminate includes a covering layer, a metal wire layer 2301, and a base film 2303. The metal wire layer 2301 is arranged on each of two opposite sides of the base film 2303. The base film 2303 may be a polyimide layer. The metal wire layer 2301 includes a copper foil 2301c and copper plating 2301d. An adhesive layer 2305 may be arranged between the metal wire layer 2301 and the base film 2303. The covering layer includes a polyimide layer 2304 and the adhesive layer 2305. Table 2 schematically shows relevant data of the flexible printed circuit board 230.

**Table 2**

| Name | | | Standard reference thickness (micron) | Minimum thickness of the flexible printed circuit board | Maximum thickness of the flexible printed circuit board |
|---|---|---|---|---|---|
| Shielding layer (Shielding Film) | | Electromagnetic shielding layer (EMI) | 10.0 | Standard reference thickness*20% | Standard reference thickness*300% |
| Flexible copper clad laminate (FCCL) | Covering layer | Polyimide layer | 12.3 | | |
| | | Adhesive layer | 17.0 | | |
| | Metal wire layer | Copper plating | 15.0 | | |
| | | Copper foil | 7.0 | | |
| | | Adhesive layer | 25.0 | | |
| | Base film | Polyimide layer | 12.5 | | |
| | | Adhesive layer | 25.0 | | |
| | Metal wire layer | Copper foil | 7.0 | | |
| | | Copper plating | 15.0 | | |
| | Covering layer | Adhesive layer | 17.0 | | |
| | | Polyimide layer | 12.3 | | |
| Shielding layer (Shielding Film) | | Electromagnetic shielding layer (EMI) | 10.0 | | |

For example, a value of a thickness of the flexible printed circuit board 230 ranges from the standard reference thickness*20% to the standard reference thickness*300%.

FIG. 13 schematically shows a partial cross-sectional structure of a flexible printed circuit board 230. As shown in FIG. 13, the flexible printed circuit board 230 includes two metal wire layers 2301. Two metal wire layers 2301 are stacked along a thickness direction of the flexible printed circuit board 230. Each metal wire layer 2301 includes a ground line 2301a and a radio frequency signal line 2301b. Along the thickness direction of the flexible printed circuit board 230, an orthographic projection of the radio frequency signal line 2301b on one of two adjacent metal wire layers 2301 is located within an orthographic projection of the ground line 2301a on the other metal wire layer, thereby helping reduce a possibility of crosstalk between the radio frequency signal line 2301b on one of the two adjacent metal wire layers 2301 and the radio frequency signal line 2301b on the other metal wire layer.

For example, the flexible printed circuit board 230 may include at least three metal wire layers 2301.

For example, in the metal wire layer 2301, a width of the ground line 2301a is greater than a width of the radio frequency signal line 2301b. Along a width direction of the flexible printed circuit board 230, a spacing between an outer edge of the orthographic projection of the radio frequency signal line 2301b and an outer edge of the orthographic projection of the ground line 2301a is greater than or equal to 0.01 millimeters.

For example, a width of the radio frequency signal line 2301b is C, where 0.02 millimeters ≤ C ≤ 2 millimeters. The width of the ground line 2301a is in a range of 1C to 5C. In one metal wire layer 2301, a spacing between the ground line 2301a and the radio frequency signal line 2301b is in a range of 0.5C to 2C.

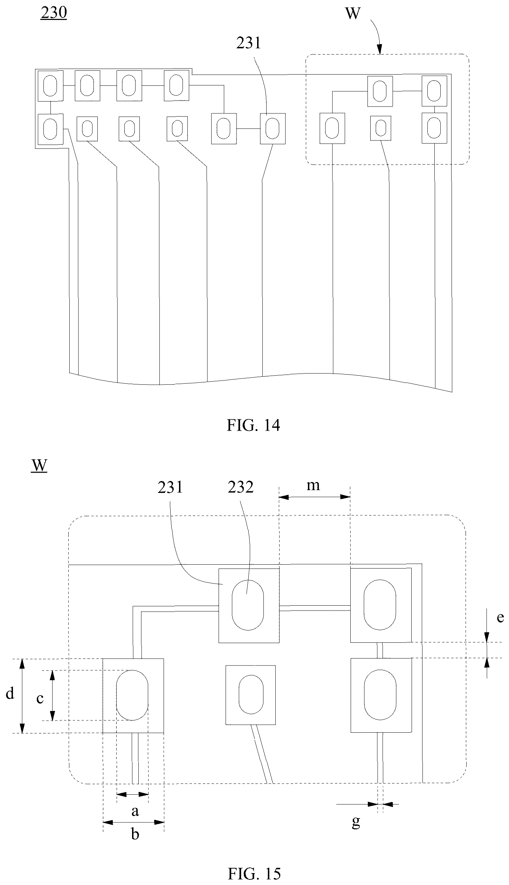

In some implementations, FIG. 14 schematically shows a partial structure of a flexible printed circuit board 230 according to this application. FIG. 15 is an enlarged view of a part W in FIG. 14. As shown in FIG. 10, FIG. 14, and FIG. 15, the printed circuit board 210 is electrically connected to the flexible printed circuit board 230 through the connection structure of the first pad 211, the solder joint 240, and the second pad 231. The solder joint 240 in the circuit board assembly 200 may be formed through a laser welding process. Because the solder joint 240 between the first pad 211 and the second pad 231 is formed through the laser welding process, in a process of welding the first pad 211 and the second pad 231, a region on the flexible printed circuit board 230 that is farther from the second pad 231 is not prone to a high-temperature condition, so that a possibility of burning of an electronic member arranged on the flexible printed circuit board 230 due to a high-temperature environment may be effectively reduced, thereby helping increase yields of the circuit board assembly 200.

For example, a solder paste (for example, a tin paste) is preset on the first pad 211 of the printed circuit board 210. The flexible printed circuit board 230 is placed at a corresponding predetermined position, so that the second pad 231 corresponds to the first pad 211. A laser beam may be irradiated from a side of the flexible printed circuit board 230 facing away from the printed circuit board 210. After the laser beam passes through the pad through hole 232 of the second pad 231, the solder paste is heated to melt the solder paste. The melted solder paste may rise along the pad through hole 232 of the second pad 231. The melted solder paste solidifies to form the solder joint 240 connecting the first pad 211 to the second pad 231.

For example, as shown in FIG. 15, the pad through hole 232 of the second pad 231 may be a waist-shaped hole. Table 1 schematically shows data of the second pad 231 of the flexible printed circuit board 230.

**Table 1**

| Attribute | Name | Minimum value | Maximum value |
|---|---|---|---|
| a | Pad through hole diameter/millimeter | 0.045 | 0.45 |
| b | Pad width/millimeter | 0.105 | 1.05 |
| c | Pad through hole length/millimeter | 0.045 | 0.45 |
| d | Pad length/millimeter | 0.105 | 1.05 |
| e | Distance between two adjacent rows of pads/millimeter | 0.075 | 0.75 |
| g | Wire width/millimeter | 0.0315 | 0.315 |
| m | Distance between two adjacent pads/millimeter | 0.075 | 0.75 |

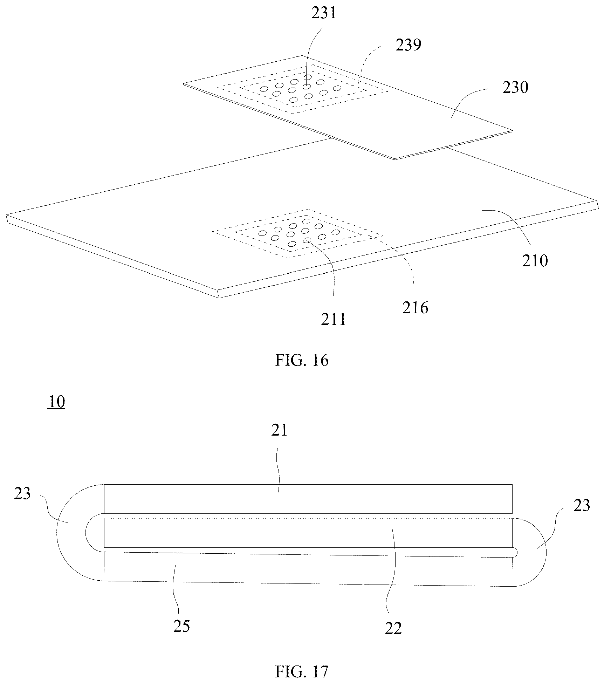

FIG. 16 schematically shows a partially exploded structure of a circuit board assembly 200 according to an embodiment. As shown in FIG. 16, a printed circuit board 210 has a first connection region 216. The first connection region 216 is arranged on an outer side of the first pad 211. The flexible printed circuit board 230 has a second connection region 239. The second connection region 239 is arranged on an outer side of the second pad 231. The first connection region 216 is connected to the second connection region 239. The printed circuit board 210 and the flexible printed circuit board 230 form a connection region at the outer side of the first pad 211 and the outer side of the second pad 231. Therefore, when the flexible printed circuit board 230 is subjected to a force along an axis perpendicular to the pad through hole 232, the force is not easily transmitted to a region of the second pad 231, thereby reducing a possibility that a tear occurs to the flexible printed circuit board 230 at the second pad 231.

For example, the first connection region 216 may be in a shape of a ring, and the first pad 211 is located on an inner side of the first connection region 216. The second connection region 239 may be in a shape of a ring, and the second pad 231 is located on an inner side of the second connection region 239.

For example, the first connection region 216 and the second connection region 239 re bonded to each other. For example, an adhesive tape or a double-sided tape may be arranged between the first connection region 216 and the second connection region 239, to bond the first connection region 216 to the second connection region 239.

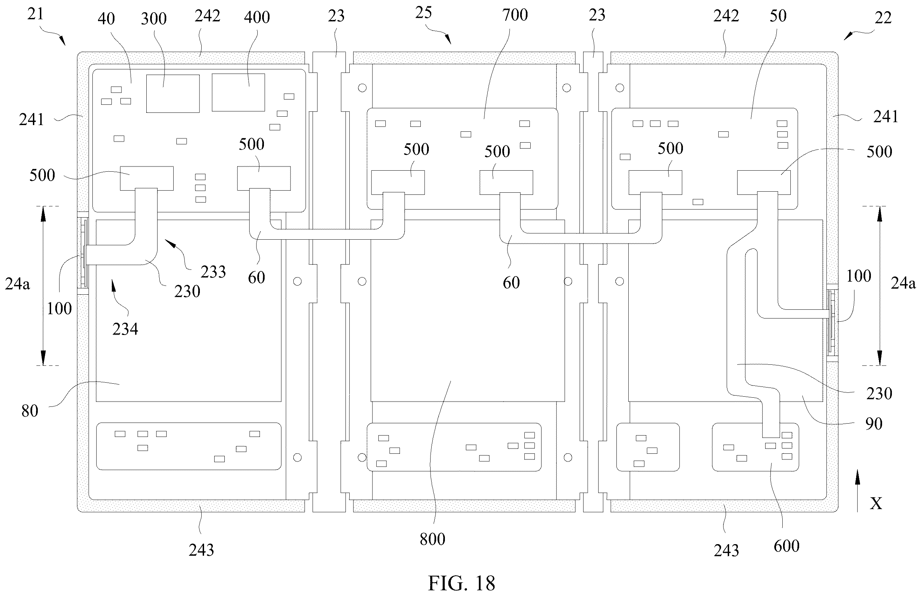

In some implementation, FIG. 17 schematically shows a structure of a folded state of an electronic device 10. FIG. 18 schematically shows a partial structure of the electronic device 10. As shown in FIG. 17 and FIG. 18, in embodiments of this application, a housing 20 of the electronic device 10 may further include a third casing 25. The third casing 25 is arranged between the first casing 21 and the second casing 22. A rotating shaft apparatus 23 is arranged between the first casing 21 and the third casing 25, and a rotating shaft apparatus 23 is arranged between the third casing 25 and the second casing 22. The first casing 21, the second casing 22, and the third casing 25 are each rotated relative to the rotating shaft apparatus 23, so that the first casing 21, the second casing 22, and the third casing 25 are stacked on each other or unfolded. When the first casing 21, the second casing 22, and the third casing 25 are stacked with each other, the electronic device 10 is in the folded state. When the first casing 21, the second casing 22, and the third casing 25 are respectively away from each other in a stacked state and unfolded to a same plane, the electronic device 10 is in an unfolded state. The flexible display screen 30 may be connected to the first casing 21, the second casing 22, and the third casing 25.

For example, the first casing 21 and the second casing 22 may include a border frame 24. An antenna radiator 100 may be arranged in a middle section 24a of the border frame 24 along the height direction X of the electronic device 10.

For example, when the electronic device 10 is in the unfolded state, an arrangement direction of the first casing 21, the second casing 22, and the third casing 25 is perpendicular to a height direction X of the electronic device 10. When a user uses the electronic device 10, the first casing 21, the third casing 25, and the second casing 22 are arranged from left to right.

For example, the main circuit board 40 may be arranged in the first casing 21. The electronic device 10 further includes a third auxiliary circuit board 700. The third auxiliary circuit board 700 may be arranged in the third casing 25. The third auxiliary circuit board 700 may be electrically connected to the main circuit board 40 through an electrical connection line 60. The electrical connection line 60 is electrically connected to the third auxiliary circuit board 700 through a board-to-board connector 500.

Alternatively, the main circuit board 40 may be arranged in the third casing 25. The third auxiliary circuit board 700 may be arranged in the first casing 21.

For example, the electronic device 10 further includes a third battery 800. The third battery 800 may be arranged in the third casing 25.

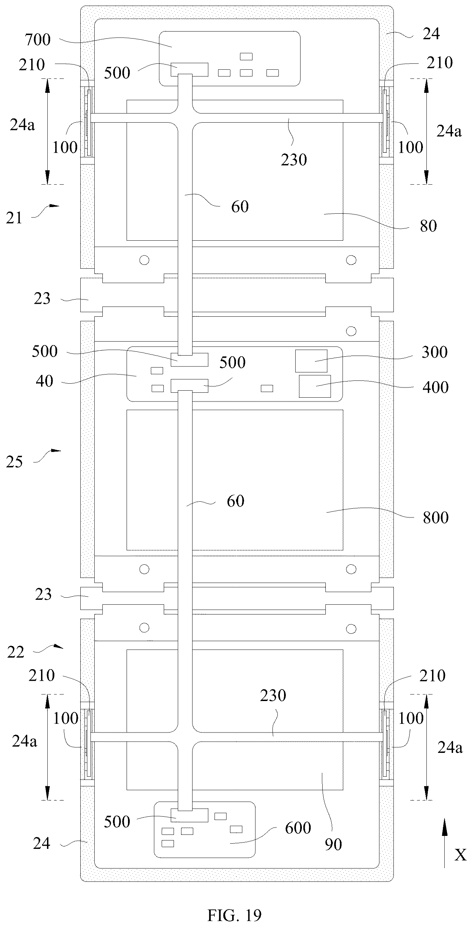

In some implementation, FIG. 19 schematically shows a partial structure of an electronic device 10. As shown in FIG. 19, an arrangement direction of a first casing 21, a second casing 22, and a third casing 25 is the same as a height direction X of the electronic device 10. When a user uses the electronic device 10, the first casing 21, the third casing 25, and the second casing 22 may be arranged from top to bottom.

For example, the main circuit board 40 may be arranged in the third casing 25. The third auxiliary circuit board 700 may be arranged in the first casing 21.

Alternatively, the main circuit board 40 may be arranged in the first casing 21. The third auxiliary circuit board 700 may be arranged in the third casing 25.

For example, the first casing 21 and the second casing 22 may include a border frame 24. An antenna radiator 100 may be arranged in a middle section 24a of the border frame 24 along the height direction X of the electronic device 10.

For example, the electronic device 10 may further include a third battery 800. The third battery 800 may be arranged in the third casing 25.

For example, an electrical connection line 60 may be a flexible printed circuit board. The electrical connection line 60 and a flexible printed circuit board 230 in a circuit board assembly 200 may be integrally formed.

In the descriptions of embodiments of this application, it should be noted that, unless otherwise explicitly specified and defined, the terms "mount", "connected", and "connection" should be understood in a broad sense. For example, the connection may be a fixed connection, an indirect connection through an intermediary, internal communication inside two elements, or an interaction relationship between two elements. A person of ordinary skill in the art can understand specific meanings of the foregoing terms in embodiments of this application according to a specific situation.

In embodiments of this application, it does not indicate or imply that an apparatus or an element needs to have a particular orientation or needs to be constructed and operated in a particular orientation, and therefore should not be construed as a limitation on embodiments of this application. In the description of embodiments of this application, unless otherwise specifically limited, "a plurality of" means at least two.

The terms such as "first", "second", "third", and "fourth" (if any) in the specification and claims of this application and in the accompanying drawings are used for distinguishing similar objects and not necessarily used for describing any particular order or sequence. It should be understood that data used in this way is exchangeable in a proper case, so that embodiments of this application described herein can be implemented in an order different from the order shown or described herein. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

The term "a plurality of" in this specification means two or more. The term "and/or" used herein describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects. In a formula, the character "/" indicates that the associated objects are in a "division" relationship.

It may be understood that various numerical numbers in embodiments of this application are merely used for differentiation for ease of description, and are not used to limit the scope of embodiments of this application.

It may be understood that in embodiments of this application, sequence numbers of the foregoing processes do not mean execution sequences. The execution sequences of the processes should be determined according to functions and internal logic of the processes, and should not be construed as any limitation on the implementation processes of embodiments of this application.

## Claims

1. An electronic device, comprising:
a housing, comprising a border frame, wherein the border frame comprises an antenna radiator, and the antenna radiator comprises a feed point and a ground point;
a circuit board assembly, arranged in the housing, wherein the circuit board assembly comprises a printed circuit board, a radio frequency switch, a flexible printed circuit board, and a solder joint, the printed circuit board is arranged facing the antenna radiator, the printed circuit board comprises a feed terminal and a ground terminal, the feed point is electrically connected to the feed terminal, the ground point is electrically connected to the ground terminal, the radio frequency switch is arranged on the printed circuit board, the radio frequency switch is electrically connected to the antenna radiator, the printed circuit board comprises a first pad, the flexible printed circuit board comprises a second pad, the second pad has a pad through hole, the first pad is arranged facing the pad through hole, the solder joint is connected to the first pad and the second pad, and a part of the solder joint is located in the pad through hole; and
a main circuit board, arranged in the housing, wherein the flexible printed circuit board is electrically connected to the main circuit board and the printed circuit board.

2. An electronic device, comprising:
a housing, comprising a border frame, wherein the border frame comprises an antenna radiator, and the antenna radiator comprises a feed point and a ground point;
a circuit board assembly, arranged in the housing, wherein the circuit board assembly comprises a printed circuit board, a radio frequency switch, and a flexible printed circuit board, the printed circuit board is arranged facing the antenna radiator, the printed circuit board comprises a feed terminal and a ground terminal, the feed point is electrically connected to the feed terminal, the ground point is electrically connected to the ground terminal, the radio frequency switch is arranged on the printed circuit board, the radio frequency switch is electrically connected to the antenna radiator, and the printed circuit board and the flexible printed circuit board are integrally formed; and
a main circuit board, arranged in the housing, wherein the flexible printed circuit board is electrically connected to the main circuit board and the printed circuit board.

3. The electronic device according to claim 1, wherein the solder joint is formed through a laser welding process.

4. The electronic device according to claim 1 or 3, wherein the printed circuit board has a first connection region, the first connection region is arranged on an outer side of the first pad, the flexible printed circuit board has a second connection region, the second connection region is arranged on an outer side of the second pad, and the first connection region is connected to the second connection region.

5. The electronic device according to any one of claims 1 to 4, wherein along a height direction of the electronic device, the antenna radiator is located in a middle section of the border frame.

6. The electronic device according to claim 5, wherein the border frame comprises a break joint, and two ends of the antenna radiator are each provided with the break joint along the height direction.

7. The electronic device according to any one of claims 1 to 6, wherein the circuit board assembly further comprises a conductive elastic member, the conductive elastic member is arranged between the feed point and the feed terminal, and the conductive elastic member is arranged between the ground point and the ground terminal.

8. The electronic device according to any one of claims 1 to 7, further comprising a board-to-board connector, wherein the flexible printed circuit board is electrically connected to the main circuit board through the board-to-board connector.

9. The electronic device according to any one of claims 1 to 8, further comprising a radio frequency transceiver module and a radio frequency chip, wherein the radio frequency transceiver module and the radio frequency chip are both arranged on the main circuit board, the radio frequency transceiver module is electrically connected to the radio frequency chip, and the flexible printed circuit board is electrically connected to the radio frequency transceiver module.

10. The electronic device according to any one of claims 1 to 9, wherein the border frame has an accommodating portion, and at least part of the printed circuit board is arranged in the accommodating portion.

11. The electronic device according to claim 10, wherein the printed circuit board comprises a positioning portion, the border frame comprises a limiting portion, and the positioning portion is connected to the limiting portion.

12. The electronic device according to any one of claims 1 to 11, wherein along a thickness direction of the printed circuit board, the radio frequency switch is arranged on a side of the printed circuit board facing the antenna radiator.

13. The electronic device according to any one of claims 1 to 12, wherein a value of a spacing between the radio frequency switch and the feed terminal is in a range of 15 millimeters to 100 millimeters; or
a value of a spacing between the radio frequency switch and the ground terminal is in a range of 15 millimeters to 100 millimeters.

14. The electronic device according to any one of claims 1 to 13, wherein the printed circuit board comprises an antenna interface pad, a control signal pad, and a ground pad, a periphery of the antenna interface pad is provided with a plurality of ground pads, and a periphery of the control signal pad is provided with a plurality of ground pads.

15. The electronic device according to claim 14, wherein a minimum spacing between the antenna interface pad and the control signal pad is greater than or equal to 3 millimeters; or
a minimum spacing between each of the ground pads on the periphery of the antenna interface pad and each of the ground pads on the periphery of the control signal pad is greater than or equal to 2 millimeters.

16. The electronic device according to any one of claims 1 to 15, wherein the flexible printed circuit board comprises at least two metal wire layers, the at least two metal wire layers are stacked along a thickness direction of the flexible printed circuit board, each of the metal wire layers comprises a ground line and a radio frequency signal line, and an orthographic projection of the radio frequency signal line on one of two adjacent metal wire layers is located within an orthographic projection of the ground line on the other metal wire layer.

17. The electronic device according to claim 16, wherein along a width direction of the flexible printed circuit board, a spacing between an outer edge of the orthographic projection of the radio frequency signal line and an outer edge of the orthographic projection of the ground line is greater than or equal to 0.01 millimeters.

18. The electronic device according to any one of claims 1 to 17, wherein the border frame is a metal frame, and a part of the border frame forms the antenna radiator; or the border frame comprises an isolating frame body, and the antenna radiator is arranged on the isolating frame body.

19. The electronic device according to any one of claims 1 to 18, wherein the housing comprises a rotating shaft apparatus, a first casing, and a second casing, the first casing and the second casing are separately connected to the rotating shaft apparatus, the first casing and the second casing are separately rotatable relative to the rotating shaft apparatus, so that the first casing and the second casing are stacked on each other or unfolded, and the first casing and the second casing each comprise the border frame.

20. The electronic device according to claim 19, further comprising a first battery, wherein the first battery is arranged in the first casing, and along a thickness direction of the electronic device, at least part of the flexible printed circuit board in the first casing is located on a side of the first battery.

21. The electronic device according to claim 19 or 20, further comprising a first battery and a second battery, wherein the first battery is arranged in the first casing, the second battery is arranged in the second casing, the printed circuit board in the first casing is located on a side of the first battery facing the antenna radiator, and the printed circuit board in the second casing is located on a side of the second battery facing the antenna radiator.

22. The electronic device according to any one of claims 19 to 21, further comprising a first auxiliary circuit board and an electrical connection line, wherein the first auxiliary circuit board is arranged in the second casing, the electrical connection line is connected to the main circuit board and the first auxiliary circuit board, and the flexible printed circuit board in the second casing is electrically connected to the first auxiliary circuit board.

23. The electronic device according to claim 22, further comprising the board-to-board connector, wherein the main circuit board is electrically connected to the electrical connection line through the board-to-board connector, and the first auxiliary circuit board is electrically connected to the electrical connection line through the board-to-board connector; or
the flexible printed circuit board in the second casing is electrically connected to the first auxiliary circuit board through the board-to-board connector.

24. The electronic device according to claim 22 or 23, further comprising a second auxiliary circuit board, wherein the second auxiliary circuit board is arranged in the second casing, the flexible printed circuit board in the second casing comprises a body, a first branch, and a second branch, the body is electrically connected to the first auxiliary circuit board, the first branch is electrically connected to the printed circuit board in the second casing, and the second branch is electrically connected to the second auxiliary circuit board.

25. The electronic device according to claim 24, further comprising the second battery, wherein the second battery is arranged in the second casing, the second battery is arranged between the first auxiliary circuit board and the second auxiliary circuit board, and at least part of the first branch and at least part of the second branch are located on a side of the second battery along the thickness direction of the electronic device.

26. The electronic device according to claim 24 or 25, wherein the first branch comprises a first connection segment and a second connection segment that intersect each other, the first connection segment is connected to the body, and the second connection segment is electrically connected to the printed circuit board.

27. The electronic device according to claim 26, wherein the second branch comprises a third connection segment, a fourth connection segment, a fifth connection segment, and a sixth connection segment that are connected in sequence, the third connection segment is connected to the body, the sixth connection segment is electrically connected to the second auxiliary circuit board, an included angle between the fourth connection segment and the fifth connection segment is greater than or equal to 90°, and an included angle between the fifth connection segment and the sixth connection segment is greater than or equal to 90°.

28. The electronic device according to claim 27, wherein an included angle between the first connection segment and the third connection segment is in a range of 30° to 150°; or
a minimum spacing between the first connection segment and the fourth connection segment is greater than or equal to 3 millimeters; or
along the height direction of the electronic device, a spacing between the body and an edge of the second connection segment close to the second auxiliary circuit board is greater than or equal to 5 millimeters.

29. The electronic device according to any one of claims 19 to 28, wherein the housing further comprises a third casing, wherein the rotating shaft apparatus is arranged between the first casing and the third casing, the rotating shaft apparatus is arranged between the third casing and the second casing, and the first casing, the second casing, and the third casing are each rotatable relative to the rotating shaft apparatus, so that the first casing, the second casing, and the third casing are stacked on each other or unfolded.
